# FASCICULE DE BREVET EUROPEEN

(11) **EP 2 673 170 B1**
(45) Date de publication et mention de la délivrance du brevet: **09.09.2015**
(21) Numéro de dépôt: 12705894.9
(22) Date de dépôt: 17.01.2012
(51) Int. Cl.: B60R 13/07

(54) **VOLET DE COFFRE D'UN VEHICULE, POURVU D'UN ENJOLIVEUR ARRIERE ET D'UN JOINT EMPECHANT LORS DE L'OUVERTURE DU VOLET L'ECOULEMENT DANS LE COFFRE D'EAU ACCUMULEE DANS L'ENJOLIVEUR.**
PLATTE FÜR DEN LADERAUM VON KRAFTFAHRZEUGEN MIT EINEM HINTEREN BEREICH UND EINER DICHTUNG ZUR VERHINDERUNG DER ANSAMMLUNG VON IN DEN LADERAUM GEFLOSSENEM WASSER IM HINTEREN BEREICH BEI GEÖFFNETER PLATTE
PANEL FOR THE LUGGAGE COMPARTMENT OF A VEHICLE, PROVIDED WITH A REAR RIM AND A SEAL FOR PREVENTING WATER HAVING ACCUMULATED IN THE RIM FROM FLOWING INTO THE LUGGAGE COMPARTMENT WHEN THE PANEL IS OPENED

(30) Priorité: 07.02.2011 FR 1150970
(43) Date de publication de la demande: 18.12.2013
(73) Titulaire: Peugeot Citroën Automobiles SA, 78140 Vélizy Villacoublay (FR)
(72) Inventeur: MICHEL, Xavier, F-77340 Pontault-combault (FR); D'AMBROSIO, Leonardo, F-91510 Lardy (FR)
(86) Numéro de dépôt international: PCT/FR2012/050096
(87) Numéro de publication internationale: WO 2012/107659

(56) Documents cités:
- EP-A1- 1 457 373
- FR-A- 2 715 115
- FR-A1- 2 915 441
- FR-A1- 2 919 843
- FR-A1- 2 922 492
- JP-A- 8 067 219
- JP-A- 8 230 468
- US-A- 5 488 805

## Description

L'invention a trait à un élément d'habillage destiné à être monté sur un ouvrant de véhicule. Plus particulièrement, l'invention a trait à un enjoliveur de volet de coffre à bagages. L'invention a trait également à un ouvrant de véhicule équipé d'un élément d'habillage. Plus particulièrement, l'invention a trait également à un volet de coffre à bagages pourvu d'un enjoliveur. L'invention a trait également à un procédé d'assemblage d'un tel ouvrant de véhicule.

L'utilisation d'éléments d'habillage, tel que des enjoliveurs, sur des éléments de carrosserie est courante. De tels éléments d'habillage forment souvent une cavité susceptible d'emmagasiner de l'eau provenant de ruissellements extérieurs et/ou de projections occasionnées par exemple par le passage du véhicule dans une station de lavage automatique ou encore par de fortes pluies. Lorsque l'élément de carrosserie comportant l'élément d'habillage est un ouvrant, le changement d'orientation de la cavité formée par l'élément d'habillage peut alors provoquer un vidage du volume d'eau contenu. Lorsque l'écoulement d'eau lors du vidage se trouve à la verticale du périmètre de l'ouverture ainsi créé par le mouvement de l'ouvrant, l'eau va s'écouler dans le véhicule. Un tel écoulement d'eau dans l'habitacle ou le coffre à bagages du véhicule constitue une nuisance pour l'utilisateur et une dégradation de la qualité perçue.

Le document de brevet FR 2 715 115 A1, voir préambule de la revendication 1, aborde une problématique apparentée à celle évoquée ci-avant, à savoir celle de l'écoulement d'eau accumulée dans un bandeau d'ouvrant de coffre tel qu'un hayon arrière lors de l'ouverture de ce dernier. Plus particulièrement, ce document aborde la problématique de manque de rigidité d'un tel bandeau lorsqu'un passage d'évacuation de l'eau accumulée est ménagé entre le socle d'un tel bandeau et la surface de la carrosserie. La solution proposée consiste à prévoir un socle continu et à prévoir un passage d'évacuation entre le socle et la partie transparente du bandeau. Cette solution n'empêche en aucun cas l'écoulement de l'eau lors de l'ouverture de l'ouvrant. Cet enseignement manque par conséquent d'apporter une solution au problème d'écoulement dans le volume du coffre d'eau accumulée dans un élément d'habillage tel qu'un bandeau.

Le document de brevet JP 10 175447 A aborde la problématique d'écoulement d'eau dans le volume d'un coffre de véhicule lors de l'ouverture du volet. Le volet comporte en effet un renfoncement au niveau de la face arrière, ce renfoncement logeant des feux de signalisation. Le volume de ce renfoncement est susceptible de recevoir de l'eau ruisselant depuis la face supérieure du volet. De l'eau peut alors s'accumuler sur la paroi inférieure du volume en question, et ce malgré la présence de trous d'évacuation au point bas du volume. Le volume est pourvu de joints à son point bas lorsque le volet est relevé afin d'éviter tout écoulement d'eau dans le volume du coffre lors de son ouverture. Cette solution est intéressante mais se limite à un coffre pourvu d'un renfoncement sur sa face arrière.

Le document de brevet JP-403-7026 U aborde une problématique similaire, à savoir celle de l'écoulement d'eau vers l'intérieur du véhicule depuis le long de la surface extérieure d'un volet arrière de camionnette lors de son ouverture. En effet, lors de l'ouverture du volet, ce dernier va être orienté de manière relevée par rapport à son axe pivot, ce qui a pour conséquence que l'eau stagnante sur sa grande surface va s'écouler vers l'arrière du toit à proximité de l'axe pivot et pourrait ensuite par effet de tension superficielle contourner le bord avant du volet et s'écouler ensuite dans le véhicule. La solution divulguée consiste à prévoir des murets de section en forme de C aux deux coins supérieurs du volet sur sa face intérieure de manière à retenir un tel écoulement d'eau possible et éviter le phénomène sus mentionné. Cette solution bien qu'efficace se limite à une problématique bien ciblée et liée à un type de volet et de véhicule bien spécifique.

L'invention a pour objectif de proposer une solution aux problèmes d'écoulement d'eau dans le volume du coffre ou dans l'habitacle d'un véhicule palliant au moins un des inconvénients sus mentionnés. Plus particulièrement, l'invention a pour objectif de proposer une solution aux problèmes d'écoulement dans le volume du coffre ou dans l'habitacle d'un véhicule d'eau accumulée dans un élément d'habillage.

L'invention a pour objet un élément d'habillage de carrosserie destiné à être monté sur un ouvrant d'un véhicule et formant avec l'ouvrant une cavité susceptible de contenir un volume d'eau provenant de ruissellement depuis l'extérieur du véhicule et susceptible de changer d'orientation et de se vider lors de l'ouverture de l'ouvrant, remarquable en ce qu'il comprend des moyens d'étanchéité avec l'ouvrant disposés de manière à empêcher au moins partiellement le vidage du volume d'eau lors de l'ouverture de l'ouvrant.

Ces mesures permettent de conserver un montage de l'élément d'habillage sur l'ouvrant qui est optimal d'un point de vue coût réparation en cas de dégâts tout en empêchant l'écoulement d'eau accumulée dans l'élément d'habillage lors de la manipulation de l'ouvrant. Ce montage prévoit en effet la présence d'au moins une fente ou passage entre les parois de montage de l'élément d'habillage et les parois correspondantes de l'ouvrant.

Les moyens d'étanchéité interagissent avec l'élément d'habillage et avec l'ouvrant (ou tout composant de l'ouvrant). Ils peuvent donc être solidaires spécifiquement de l'élément d'habillage ou de l'ouvrant ou encore de l'élément d'habillage et de l'ouvrant.

Les moyens d'étanchéité sont préférentiellement disposés de manière à ne pas interférer sur la liaison entre l'élément d'habillage et l'ouvrant. Pour ce faire, ils sont préférentiellement montés glissant entre des parois se chevauchant de l'élément d'habillage et de l'ouvrant.

Selon un mode avantageux de l'invention, l'élément d'habillage est un enjoliveur de volet de coffre à bagages.

Selon un autre mode avantageux de l'invention, l'élément d'habillage comporte une paroi enjoliveuse destinée à enjoliver la face arrière du volet, deux parois latérales et une paroi inférieure, la cavité étant formée par la paroi inférieure, le bas de la paroi enjoliveuse et le bas des parois latérales.

Selon un encore autre mode avantageux de l'invention, les parois latérales et/ou la paroi inférieure est/sont conçue(s) pour chevaucher des parois correspondantes de l'ouvrant.

Selon un encore autre mode avantageux de l'invention, les moyens d'étanchéité sont disposés sur la paroi inférieure à distance de la paroi enjoliveuse.

Selon un encore autre mode avantageux de l'invention, les moyens d'étanchéité sont disposés le long des deux coins inférieurs de l'élément d'habillage.

Selon un encore autre mode avantageux de l'invention, la cavité comporte au moins un passage d'évacuation de l'eau en position fermée de l'ouvrant. Ce ou ces passages d'eau sont préférentiellement dimensionnés pour ne pas permettre un vidage du volume en question en moins de quelques minutes, plus préférentiellement en moins de 5 minutes, plus préférentiellement encore 3 minutes, plus préférentiellement encore 1 minute.

L'invention a également pour objet un ouvrant de véhicule comprenant une structure préférentiellement métallique et caractérisé en ce qu'il comprend un élément d'habillage conforme à l'invention.

Selon un mode avantageux de l'invention, l'élément d'habillage comprend au moins une paroi chevauchant une paroi correspondante de la structure de l'ouvrant, les moyens d'étanchéité étant disposés entre lesdites parois au niveau de leur chevauchement. Les moyens d'étanchéité sont préférentiellement disposés de manière à pouvoir glisser le long d'au moins une desdites parois en cas d'impact sur l'élément d'habillage.

Selon un autre mode avantageux de l'invention, les moyens d'étanchéité comprennent un joint, préférentiellement en matériau du type mousse.

Selon un encore autre mode avantageux de l'invention, les moyens d'étanchéité comprennent une nervure solidaire de la structure ou de l'élément d'habillage.

Selon un encore autre mode avantageux de l'invention, l'ouvrant est un volet de coffre à bagages, l'élément d'habillage est conforme à l'invention et les moyens d'étanchéité s'étendent le long de chaque paroi latérale jusqu'à la paroi inférieure.

L'invention a également pour objet un procédé de montage d'un ouvrant de véhicule conforme à l'invention, caractérisé en ce qu'il comprend l'application des moyens d'étanchéité après l'assemblage de la structure de l'ouvrant avec l'élément d'habillage.

Selon un mode avantageux de l'invention, l'application des moyens d'étanchéité comprend l'extrusion d'un joint entre l'élément d'habillage et la structure de l'ouvrant.

D'autres caractéristiques et avantages de la présente invention seront mieux compris à l'aide de la description et des dessins parmi lesquels :
- la figure 1 est une illustration de l'arrière du volet de coffre arrière d'un véhicule, le volet étant équipé d'un enjoliveur ;
- la figure 2 est une illustration de la zone de jonction latérale entre l'enjoliveur et la partie structurelle du volet de coffre ;
- la figure 3 est une autre illustration plus détaillé de la zone de jonction latérale entre l'enjoliveur et la partie structurelle du volet de coffre ;
- la figure 4 est une illustration de la zone de chevauchement entre une paroi latérale de l'enjoliveur et la partie structurelle du volet de coffre, montrant ainsi la possibilité pour l'eau de ruissellement et/ou de projection de pénétrer le volume de l'enjoliveur ;
- la figure 5 est une illustration du volume de l'enjoliveur susceptible de recevoir de l'eau de ruissellement et les trous d'évacuation ;
- la figure 6 est une illustration de la zone de chevauchement des parois de l'enjoliveur et de la partie structurelle du volet de coffre équipée de moyens d'étanchéité conformément à l'invention.

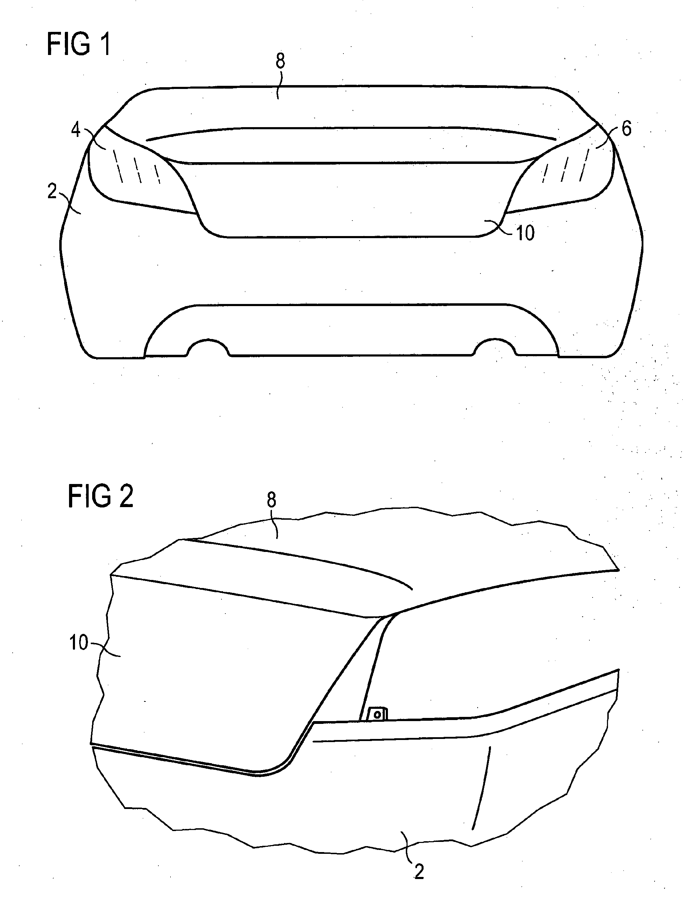

L'arrière du véhicule illustré à la figure 1 comprend essentiellement un pare-chocs 2, deux feux de signalisation 4 et 6 et un volet de coffre 8. Le volet de coffre 8 est équipé d'un enjoliveur 10 sur sa face arrière. La face visible de l'enjoliveur 10 est dans la continuité de la surface extérieure supérieure du volet et assure une liaison esthétique avec les blocs optiques 4 et 6 et avec le pare-chocs 2. Dans le cas précis de la figure 1, la face visible de l'enjoliveur est généralement verticale. Sa surface n'est habituellement pas plane mais bien stylée de manière à être en accord avec le design général de la carrosserie du véhicule.

Comme cela est visible à la figure 2 qui illustre la zone de jonction latérale entre l'enjoliveur et la partie structurelle du volet de coffre, l'enjoliveur 10 forme un volume de section grossièrement triangulaire, ce volume étant susceptible de recevoir de l'eau de ruissellement et/ou de projection depuis l'extérieur du véhicule.

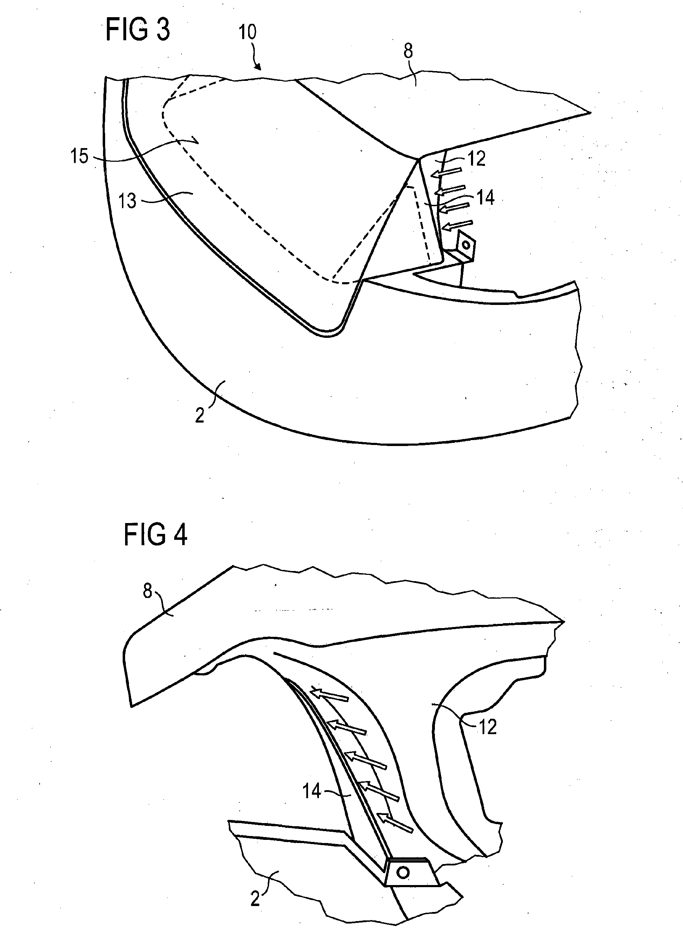

La figure 3 illustre d'avantage le volume de l'enjoliveur 10. L'enjoliveur 10 comprend, outre sa paroi enjoliveuse 15 visible depuis l'arrière du véhicule, deux parois latérales 14 et une paroi inférieure 13. Ces parois latérales et la paroi inférieure chevauchent essentiellement des parois correspondantes de la partie structurelle du volet de coffre 8. En effet, comme cela est visible à la figure 3, la paroi latérale droite 14 de l'enjoliveur recouvre partiellement par chevauchement une paroi correspondante de la partie structurelle 12 du volet 8. L'eau peut ainsi pénétrer assez facilement dans le volume de l'enjoliveur suivant les flèches de la figure 3. Il en est de même pour la jonction latérale opposée entre l'enjoliveur et la structure du volet de coffre.

Le chevauchement entre la paroi latérale droite 14 de l'enjoliveur 10 et la partie structurelle 12 du volet 8 ainsi que la possibilité de rentrée d'eau à cet endroit sont illustrés à la figure 4 qui est une vue de cette zone depuis une position avant. On peut observer que la partie structurelle 12 comporte diverses formes destinées à assurer la rigidité nécessaire au volet, en particulier à la partie arrière du volet équipée de l'enjoliveur. Les flèches indiquent bien l'espace sans obstacle pour l'eau lui permettant de rentrer dans le volume de l'enjoliveur.

Il est à noter que cette jonction par chevauchement entre l'enjoliveur 10 est le volet 8 est voulue et motivée essentiellement par des raisons de réparabilité du volet en cas de dégâts légers. En effet, en cas de collision par exemple avec un autre véhicule à faible vitesse, l'enjoliveur, outre sa fonction de style, a pour fonction de servir de pièce fusible ou martyre. Cette pièce va en effet absorber une grande partie de l'énergie du choc et se détériorer en conséquence sans abimer la partie structurelle du volet. Le remplacement de l'enjoliveur est bien sûr sensiblement moins coûteux que le remplacement du volet. Cette mesure permet ainsi de mieux positionner le véhicule dans les classements établis par les assureurs et, partant, de rendre le véhicule moins coûteux à assurer. La fixation de l'enjoliveur est donc spécialement conçue pour lui permettre de se détériorer et de se déplacer par rapport à la partie structurelle sans nécessairement déformer la partie structurelle du volet. Pour ce faire, les parois latérales et la paroi inférieure de l'enjoliveur chevauchent des parois correspondantes de la partie structurelle sur la majeure partie de leur contour. Des zones de fixation rigide entre ces deux éléments sont bien sûr prévues (non représentées) afin d'assurer une stabilité de fixation satisfaisante.

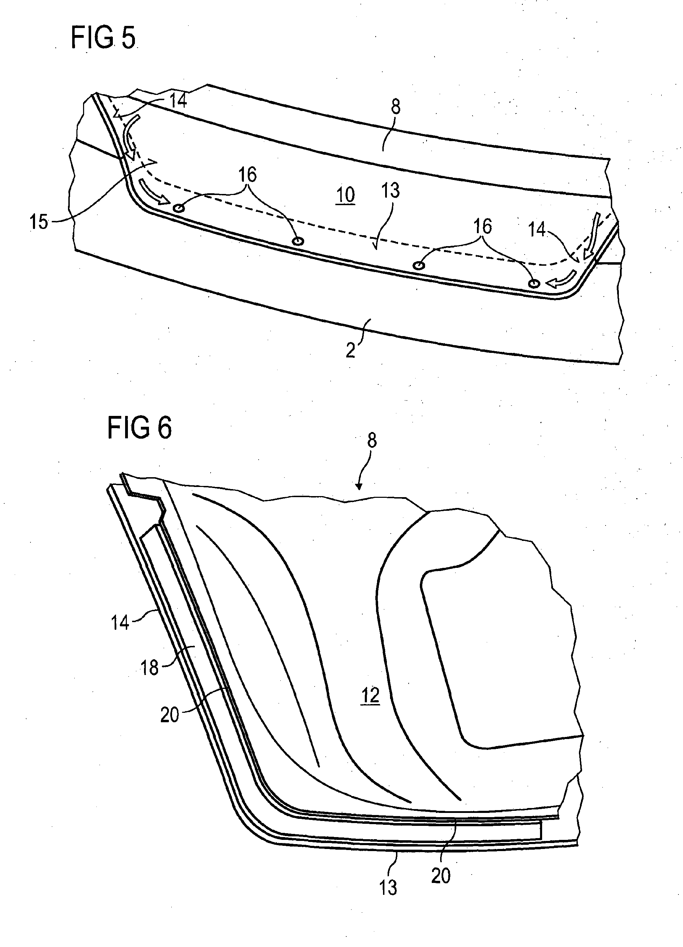

La figure 5 illustre le phénomène d'accumulation d'eau de ruissellement et/ou de projection dans le volume de l'enjoliveur 10. Les rentrées d'eau illustrées aux figures 3 et 4 sont également illustrées par les flèches essentiellement verticales de la figure 5. L'eau pénétrant ainsi le volume de l'enjoliveur va couler le long des parois latérales 14 pour s'accumuler dans le volume formé par la paroi inférieure 13 avec la paroi enjoliveuse 15. En effet, la paroi inférieure 13 est légèrement inclinée vers le haut depuis sa jonction avec la paroi enjoliveuse 15. En d'autres termes, la paroi inférieure 13 est légèrement inclinée vers le haut dans un plan généralement vertical et longitudinal du véhicule. L'angle d'inclinaison est de l'ordre de quelques degrés. Il peut être compris entre 1° est 30°, préférentiellement entre 5° et 30°, plus préférentiellement encore entre 5° et 20°.

Des orifices 16 sont prévus sur la paroi inférieure 13, répartis le long de la jonction de cette paroi avec la paroi enjoliveuse 15, de manière à permettre une évacuation progressive de l'eau rentrant éventuellement dans le volume de l'enjoliveur 10. Ces orifices sont cependant volontairement dimensionnés de manière à ne permettre qu'un écoulement limité. En effet, le rôle de ces orifices est de permettre une évacuation d'eau qui pourrait rentrer dans le volume dans des conditions normales du véhicule, c'est-à-dire un débit de rentrée d'eau limité. Dans le cas du passage du véhicule dans une station de lavage automatique, les rentrées d'eau sont exceptionnellement plus importantes et ne peuvent être évacuées rapidement par ces orifices. Ces orifices sont en effet volontairement de petite section de passage afin d'éviter des coulées d'eau importantes sur le pare-chocs et également afin d'éviter d'éventuelles rentrées de poussière et de saleté dans le volume de l'enjoliveur.

La paroi inférieure 13 de l'enjoliveur est également légèrement courbée dans un plan transversal vertical. L'eau aura par conséquent tendance à s'accumuler au niveau des deux coins inférieurs du volume, c'est-à-dire à proximité des zones de jonction de la paroi inférieure 13 avec les parois latérales 14 et la paroi enjoliveuse 15.

La figure 6 illustre les moyens d'étanchéité sous forme d'un joint 18 disposé entre la paroi de l'enjoliveur et la paroi correspondante de la partie structurelle 12 au niveau d'un des coins inférieurs. En effet, un joint 18 en matière élastique comme par exemple du type mousse est disposé entre la paroi inférieure 13 de l'enjoliveur et la paroi correspondante 20 de la partie structurelle 12. Dans le cas précis de cet exemple de réalisation, le joint s'étend jusqu'à une partie haute de la paroi latérale 14 de l'enjoliveur en passant par le coin ou encore la jonction entre la paroi inférieure 13 et la paroi latérale étant entendu que ce coin est généralement arrondi.

Ces moyens d'étanchéité sont disposés à hauteur du chevauchement des parois de l'enjoliveur et de la partie structurelle du coffre, aux points bas du volume de l'enjoliveur délimité par ce chevauchement lorsque le volet est en position d'ouverture. Dans le cas précis de cet exemple de réalisation, les moyens d'étanchéité sont concentrés aux deux coins inférieurs. En fonction de la géométrie de l'enjoliveur et du volet, il se peut que les moyens d'étanchéité soient disposés tout le long de la paroi inférieure ou encore, par exemple, à une zone centrale basse de cette paroi si tant est qu'elle présente une zone centrale basse. De manière générale, l'étendue des moyens d'étanchéité le long notamment des parois latérales pourra dépendre notamment de l'inclinaison de la fente de sortie pour l'eau lorsque le volet est en position relevée maximale ou encore en position la plus critique en ce qui concerne l'écoulement d'eau dans le volume du coffre. L'étendue des moyens d'étanchéité le long notamment des parois latérales pourra également dépendre du volume d'eau maximum susceptible d'être accumulé dans l'enjoliveur. En effet, de ces deux paramètres va dépendre l'étendue du volume à retenir et, partant, l'étendue des moyens d'étanchéité.

Les moyens d'étanchéité peuvent prendre diverses formes, comme par exemple un joint préformé qui est mis en place par insertion lors du montage du volet de coffre, après assemblage de l'enjoliveur et de la partie structurelle. Alternativement, le joint peut être extrudé sur place après assemblage de l'enjoliveur et de la partie structurelle. Encore alternativement, les moyens d'étanchéité peuvent prendre la forme d'une nervure formée ou attachée à l'un ou aux deux de l'enjoliveur et de la partie structurelle du coffre. En effet, l'objectif de ces moyens d'étanchéité est de former un muret apte à au moins temporairement retenir l'eau accumulée dans le volume de l'enjoliveur le temps de l'ouverture du coffre. Une fois le coffre refermé, l'eau toujours emprisonnée pourra alors progressivement s'écouler au travers des orifices 16 prévus à cet effet et décrits en relation avec la figure 5. Les moyens d'étanchéité ne doivent pas nécessairement présenter une étanchéité parfaite, l'objectif étant de retenir temporairement la plus grande partie, idéalement la totalité de l'eau emmagasinée dans le volume de l'enjoliveur. C'est notamment pour ces raisons qu'ils pourront prendre d'autres formes que celles qui ont été mentionnées ci-avant.

De manière générale, il est à noter que l'invention est applicable à divers éléments d'habillage d'ouvrant de véhicule. En effet, bien que l'exemple de réalisation de l'invention ait été décrit en relation avec un enjoliveur de face arrière d'un volet de coffre de véhicule, l'invention n'en reste pas moins applicable à d'autres configurations et types d'éléments d'habillage pour autant que ceux-ci forment éventuellement avec l'ouvrant de carrosserie un volume susceptible de stocker de l'eau provenant de ruissellement et/ou de projection extérieure et de verser cette eau dans l'habitacle, dans le coffre ou dans toute autre partie sensible du véhicule lors de la manipulation de l'ouvrant.

## Revendications

1. Elément d'habillage de carrosserie (10) monté sur un ouvrant (8) d'un véhicule et formant une cavité susceptible de contenir un volume d'eau provenant de ruissellement et/ou de projection depuis l'extérieur du véhicule et susceptible de changer d'orientation et de se vider lors de l'ouverture de l'ouvrant (8), caractérisé eh ce qu'il comprend des moyens d'étanchéité (18) avec l'ouvrant (8) disposés de manière à empêcher au moins partiellement le vidage du volume d'eau lors de l'ouverture de l'ouvrant, ladite cavité étant formée par l'élément d'habillage et l'ouvrant (8).

2. Elément d'habillage selon la revendication 1, **caractérisé en ce qu'**il est un enjoliveur (10) de volet (8) de coffre à bagages.

3. Elément d'habillage selon la revendication 2, **caractérisé en ce qu'**il comporte une paroi enjoliveuse (15) destinée à enjoliver la face arrière du volet (8), deux parois latérales (14) et une paroi inférieure (13), la cavité étant formée par la paroi inférieure (13), le bas de la paroi enjoliveuse (15) et le bas des parois latérales (14).

4. Elément d'habillage selon la revendication 3, **caractérisé en ce que** les parois latérales (14) et/ou la paroi inférieure (13) est/sont conçue(s) pour chevaucher des parois correspondantes (20) de l'ouvrant (8).

5. Elément d'habillage selon l'une des revendications 3 ou 4, **caractérisé en ce que** les moyens d'étanchéité (18) sont disposés sur la paroi inférieure (13) à distance de la paroi enjoliveuse (15).

6. Elément d'habillage selon l'une des revendications 3 à 5, **caractérisé en ce que** les moyens d'étanchéité (18) sont disposés le long des deux coins inférieurs de l'élément d'habillage (10).

7. Elément d'habillage selon l'une des revendications 1 à 6, **caractérisé en ce que** la cavité comporte au moins un passage (16) d'évacuation de l'eau en position fermée de l'ouvrant (8).

8. Elément d'habillage selon l'une quelconque des revendications précédentes, **caractérisé en ce que** l'ouvrant (8) comprend une structure (12) préférentiellement métallique.

9. Elément d'habillage selon la revendication 8, **caractérisé en ce que** l'élément d'habillage (10) comprend au moins une paroi (13, 14) chevauchant une paroi correspondante (20) de la structure (12) de l'ouvrant, les moyens d'étanchéité (18) étant disposés entre lesdites parois (13, 14; 20) au niveau de leur chevauchement.

10. Elément d'habillage selon l'une des revendications 8 ou 9, **caractérisé en ce que** les moyens d'étanchéité (18) comprennent un joint, préférentiellement en matériau du type mousse.

11. Elément d'habillage selon l'une des revendications 8 ou 9, **caractérisé en ce que** les moyens d'étanchéité (18) comprennent une nervure solidaire de la structure ou de l'élément d'habillage.

12. Elément d'habillage selon l'une des revendications 8 à 11, **caractérisé en ce qu'**il est un volet (8) de coffre à bagages, l'élément d'habillage (10) est conforme à la revendication 6 et les moyens d'étanchéité (18) s'étendent le long de chaque paroi latérale (14) jusqu'à la paroi inférieure (13).

13. Procédé de montage d'élément d'habillage de carrosserie (10) monté sur un ouvrant (8) d'un véhicule selon l'une des revendications 8 à 12, **caractérisé en ce qu'**il comprend l'application des moyens d'étanchéité (18) après l'assemblage de la structure (12) de l'ouvrant (8) avec l'élément d'habillage (10).

14. Procédé de montage selon la revendication 13, **caractérisé en ce que** l'application des moyens d'étanchéité (18) comprend l'extrusion d'un joint entre l'élément d'habillage (10) et la structure (12) de l'ouvrant (8).

## Patentansprüche

1. Karosserieverkleidungselement (10), das auf eine Tür (8) eines Fahrzeugs montiert ist und einen Hohlraum bildet, der ein Wasservolumen enthalten kann, das vom Rieseln und/oder Spritzen von außerhalb des Fahrzeugs stammt und die Richtung wechseln und sich beim Öffnen der Tür (8) entleeren kann, **dadurch gekennzeichnet, dass** es Mittel (18) zum Abdichten mit der Tür (8) umfasst, die derart angeordnet sind, dass sie das Entleeren des Wasservolumens beim Öffnen des Tür mindestens teilweise verhindern, wobei der Hohlraum von dem Verkleidungselement und der Tür (8) gebildet ist.

2. Verkleidungselement nach Anspruch 1, **dadurch gekennzeichnet, dass** es eine Verzierung (10) der Klappe (8) eines Kofferraums ist.

3. Verkleidungselement nach Anspruch 2, **dadurch gekennzeichnet, dass** es eine Zierwand (15) umfasst, die dazu bestimmt ist, die Rückseite der Klappe (8), zwei Seitenwände (14) und eine untere Wand (13) zu verzieren, wobei der Hohlraum durch die untere Wand (13), die Unterseite der Zierwand (15) und die Unterseite der seitlichen Wände (14) gebildet ist.

4. Verkleidungselement nach Anspruch 3, **dadurch gekennzeichnet, dass** die seitlichen Wände (14) und/oder die untere Wand (13) konzipiert ist/sind, um entsprechende Wände (20) der Tür (8) zu überdecken.

5. Verkleidungselement nach einem der Ansprüche 3 oder 4, **dadurch gekennzeichnet, dass** die Abdichtmittel (18) auf der unteren Wand (13) von der Zierwand (15) entfernt angeordnet sind.

6. Verkleidungselement nach einem der Ansprüche 3 bis 5, **dadurch gekennzeichnet, dass** die Abdichtmittel (18) entlang der zwei unteren Ecken des Verkleidungselements (10) angeordnet sind.

7. Verkleidungselement nach einem der Ansprüche 1 bis 6, **dadurch gekennzeichnet, dass** der Hohlraum mindestens eine Ableitpassage (16) des Wassers bei geschlossener Position der Tür (8) umfasst.

8. Verkleidungselement nach einem der vorhergehenden Ansprüche, **dadurch gekennzeichnet, dass** die Tür (8) eine Struktur (12), die teilweise metallisch ist, umfasst.

9. Verkleidungselement nach Anspruch 8, **dadurch gekennzeichnet, dass** das Verkleidungselement (10) mindestens eine Wand (13, 14) umfasst, die eine entsprechende Wand (20) der Struktur (12) der Tür überdecken, wobei die Abdichtmittel (18) zwischen den Wänden (13, 14; 20) auf dem Niveau ihrer Überlagerung angeordnet sind.

10. Verkleidungselement nach einem der Ansprüche 8 oder 9, **dadurch gekennzeichnet, dass** die Abdichtmittel (18) eine Dichtung, vorzugsweise aus einem Material des Typs Schaumstoff, umfassen.

11. Verkleidungselement nach einem der Ansprüche 8 oder 9, **dadurch gekennzeichnet, dass** die Abdichtmittel (18) eine Rippe umfassen, die fest mit der Struktur oder dem Verkleidungselement verbunden ist.

12. Verkleidungselement nach einem der Ansprüche 8 bis 11, **dadurch gekennzeichnet, dass** es eine Kofferraumklappe (8) ist, das Verkleidungselement (10) dem Anspruch 6 entspricht und die Abdichtmittel (18) sich entlang jeder seitlichen Wand (14) bis zu der unteren Wand (13) erstrecken.

13. Montageverfahren eines Karosserieverkleidungselements (10), das auf eine Tür (8) eines Fahrzeugs nach einem der Ansprüche 8 bis 12 montiert ist, **dadurch gekennzeichnet, dass** es das Anbringen der Abdichtmittel (18) nach dem Zusammenfügen der Struktur (12) der Tür (8) mit dem Verkleidungselement (10) umfasst.

14. Montageverfahren nach Anspruch 13, **dadurch gekennzeichnet, dass** das Anbringen der Abdichtmittel (18) die Extrusion einer Dichtung zwischen dem Verkleidungselement (10) und der Struktur (12) der Tür (8) umfasst.

## Claims

1. A bodywork finishing element (10) mounted on an opening panel (8) of a vehicle and forming a cavity capable of containing a volume of water originating from running off and/or spraying from the exterior of the vehicle and capable of changing orientation and of emptying itself when the opening panel (8) is opened, **characterized in that** it includes sealing means (18) with the opening panel (8) which are arranged so as to prevent at least partially the emptying of the volume of water when the opening panel is opened, said cavity being formed by the finishing element and the opening panel (8).

2. The finishing element according to Claim 1, **characterized in that** it is a rim (10) of a luggage compartment panel (8).

3. The finishing element according to Claim 2, **characterized in that** it comprises a trim wall (15) intended to embellish the rear face of the panel (8), two lateral walls (14) and one lower wall (13), the cavity being formed by the lower wall (13), the bottom of the trim wall (15) and the bottom of the lateral walls (14).

4. The finishing element according to Claim 3, **characterized in that** the lateral walls (14) and/or the lower wall (13) is/are designed to overlap corresponding walls (20) of the opening panel (8).

5. The finishing element according to one of Claims 3 or 4, **characterized in that** the sealing means (18) are disposed on the lower wall (13) at a distance from the trim wall (15).

6. The finishing element according to one of Claims 3 to 5, **characterized in that** the sealing means (18) are disposed along the two lower corners of the finishing element (10).

7. The finishing element according to one of Claims 1 to 6, **characterized in that** the cavity comprises at least one passage (16) for evacuation of the water in the closed position of the opening panel (8).

8. The finishing element according to any one of the preceding claims, **characterized in that** the opening panel (8) includes a preferably metallic structure (12).

9. The finishing element according to Claim 8, **characterized in that** the finishing element (10) includes at least one wall (13, 14) overlapping a corresponding wall (20) of the structure (12) of the opening panel, the sealing means (18) being disposed between said walls (13, 14; 20) at the level of their overlap.

10. The finishing element according to one of Claims 8 or 9, **characterized in that** the sealing means (18) include a seal, preferably of material of the foam type.

11. The finishing element according to one of Claims 8 or 9, **characterized in that** the sealing means (18) include a rib integral with the structure or with the finishing element.

12. The finishing element according to one of Claims 8 to 11, **characterized in that** it is a luggage compartment panel (8), the finishing element (10) is in accordance with Claim 6 and the sealing means (18) extend along each lateral wall (14) up to the lower wall (13).

13. An assembly method of a bodywork finishing element (10) mounted on an opening panel (8) of a vehicle according to one of Claims 8 to 12, **characterized in that** it includes the application of the sealing means (18) after the assembling of the structure (12) of the opening panel (8) with the finishing element (10).

14. The assembly method according to Claim 13, **characterized in that** the application of the sealing means (18) includes the extrusion of a seal between the finishing element (10) and the structure (12) of the opening panel (8).
